# EUROPEAN PATENT APPLICATION

(11) **EP 3 460 292 A1**
(43) Date of publication of application: **27.03.2019**
(21) Application number: 17192645.4
(22) Date of filing: 22.09.2017
(51) Int. Cl.: F16H 25/24, B66B 9/02

(54) **SPINDLE SCREW JOINT**

(71) Applicant: thyssenkrupp Home Solutions S.r.l., 56121 Pisa (IT); thyssenkrupp AG, 45143 Essen (DE)
(72) Inventor: Saputelli, Mario, 56030 Terricciola Pisa (IT)
(74) Representative: thyssenkrupp Intellectual Property GmbH

(57) **Abstract**

The present invention refers to a spindle for driving an elevator, the spindle having a thread characterized in that the spindle comprises at least two parts:
- a male part having a male connection end, and a first thread section on its outer surface; and
- a female part having a female connection end, and a second thread section on its outer surface; wherein the male connection end and the female connection end contact each other; wherein the spindle further comprises an angular positioning means which is adapted to position both parts in a relative position so that the first and second thread sections form a continuous thread on the spindle.

## Description

The invention relates to the field of vertical platform lifts, in particular to elevators. The invention refers in particular to a spindle for driving an elevator, wherein the spindle comprises at least two parts, said two parts being secured in position via an angular positioning means. The invention also refers to a method for replacing at least a part of a spindle, without the need to replace the whole spindle itself.

CN 104386460 discloses an elevator spindle connected by a square pin wherein the lead screw is connected with a worm wheel and the bottom of the screw is provided with a square groove which cooperates with a square connecting pin; CN 105084167 discloses built-in screw shaft elevator, wherein the drive means comprises a stop member in the form of a removable pin; CN 104670181 discloses a rope combination device for fixing a rope of a traction rope of an elevator car traction mechanism wherein a latching member is provided at the upper end of a screw, said latching member being a cotter pin. These documents disclose the use of a pin for attaching parts in an elevator system, however, not one, addresses the technical problem of replacing a part of a spindle without having to replace the whole spindle itself.

It is an object of the invention, to provide an improved spindle, in particular an improved spindle which allows a user to repair the spindle without having to remove or replace the spindle within an elevator system, whilst maintaining the integrity of the spindle thread. This object is solved by providing a spindle according to claim 1, an elevator installation according to claim 7 and a method according to claim 8.

### The spindle according to the invention

The spindle according to the invention has a continuous thread. It comprises at least two parts, a male part having a male connection end and a first thread section on its outer surface; and a female part having a female connection end, and a second thread section on its outer surface. The male connection end and the female connection end contact each other. The spindle further comprises an angular positioning means which is adapted to position both male and female parts in a relative position so that the first and second thread sections form a continuous thread on the spindle.

The spindle according to the invention provides the advantage that a spindle can be made of several parts, but the continuity of the thread remains intact. This facilitates maintenance of the elevator system and consequently reduces costs, since an individually parts of the spindle can be replaced without the need to replace the complete spindle.

In a preferred embodiment the angular positioning means comprised within the spindle according to the invention, comprises a male part opening, preferably at the male connection end, and a female part opening, preferably at the female connection end, and a pin. The pin is designed to be inserted at one female opening, so that it protrudes through into the male opening and continues to protrude into the opposite second female opening. Since removal of a pin is easier than removal of a complete spindle, this provides the advantage that a spindle according to the invention, which is in place within an elevator unit, can be easily and quickly dismantled and reassembled again.

In an preferred embodiment the male and female parts of the spindle according to the invention can each comprise a terminal end and a connection end. In assembling the male and female parts of the spindle according to the invention, the male connection end and the female connection end are preferably centered co-axially to each other. This ensures that the spindle orientation and uniformity is maintained from one terminal end of the spindle to the other terminal end of the spindle. In particular, this also ensures that the thread of the spindle according to the invention is continuous.

In a preferred embodiment the male and female part openings of the angular positioning means are comprised within the respective connection ends of the male and female parts. The connection end of the female part may comprise two female part openings and the connection end of the male part comprises one male part opening. The connection ends of both the male and female parts are centered co-axially to each other with a pin. It is preferred that a length of the pin is related to the diameter of the spindle. It is most preferred that the pin, when at its longest length, is equal to the length of the spindle core D_{C}. This is advantageous because it allows a nut to move along the total length of the spindle and pass the connection ends which are centered co-axially to each other without any interruptions. The width of the pin may be constant or varied throughout its length.

In a preferred embodiment the male and/or the female part of the spindle according to the invention can also constitute an intermediate part, wherein said intermediate part comprises a male connection end and a female connection end. Alternatively the intermediate part can comprise two male or two female connection ends. The intermediate part can be the centered co-axially with a male part, a female part, or both such that it is positioned between them. It can also be centered co-axially with a male part and a further intermediate part, or with a female part and a further intermediate part as described before. The spindle according to the invention can comprise numerous intermediate parts between the male and female part, depending on the required length and/or use of the spindle. The thread of a spindle comprising a male, female and at least one intermediate part is also continuous and functions as a single-piece spindle. Any number of intermediate parts can be used in the spindle according to the invention and the thread will still remain continuous, i.e., a continuous thread from one terminal end of the spindle to the other terminal end of the spindle.

Continuous means with respect to the thread, that the thread sections on adjacent parts are aligned to each other, so that a threaded nut attached to the thread, can pass over from one part to the next part over the thread without stopping.

In a preferred embodiment he spindle body of the spindle according to the invention comprises a cylindrical core and a thread, wherein the thread is comprised on the outer surface of the core. The diameter of the spindle thread (D_{T}) is thus greater than the diameter of the spindle core (D_{C}). The thread of the spindle according to the invention is continuous throughout the total length of the spindle. The total length of the spindle is defined by the distance between the terminal end of the male part and the terminal end of the female part. This distance varies according to the number of intermediate parts comprised within the spindle. This is advantageous because it results in a spindle whose length can be adjustable.

A method for preparing a spindle according to the invention, wherein the spindle comprises at least two parts, can comprise the following steps:
a) providing spindle parts, wherein the parts comprise at least one connection end, wherein said connection end is male or female and is without an opening suitable for receiving a pin.
b) providing two parts to an apparatus for providing an opening to the connection ends of each respective part, wherein the apparatus comprises a template spindle and at least one mechanical stop.
c) positioning the two parts at either side of the template spindle and holding them in place via the mechanical stop. The mechanical stop contacts the part at its connection end.
d) introducing at least one opening in at least one connection end, wherein said opening is suitable for receiving a pin. The opening can be formed for example, by using a drill or any other device that is capable of penetrating the spindle material;
e) positioning two parts by way of an angular positioning means. This involves contacting the male and a female connection ends and inserting a pin into their respective openings so that the pin protrudes through the male part opening and the female part opening ;

A spindle according to the invention is preferably achieved when at least a male and a female part are contacted, preferably when their respective connection ends are centered co-axially and comprise a pin, thus providing a continuous thread from one end of the spindle to the other. If there are three or more parts to be contacted, preferably also centered co-axially, more than one pin will be required.

This method can be applied to any spindle which can be cut into parts. The template spindle and mechanical stop ensure that the angle, at which the hole is made in the connection end of the first part, corresponds with the angle at which the hole is made in the connection end of the second part. This is advantageous because it ensures that tolerances between parts are controlled and thus, when the connection ends are contacted, and preferably centered co-axially to each other and comprising a pin, that the thread of the spindle remains continuous throughout. The thread of the spindle according to the invention remains continuous throughout its whole length, regardless of how many parts are contained within it e.g., no intermediate part is present, one or more intermediate part(s) is/are present.

A further advantage of this method is that a reserve of spindle parts can be prepared and stored. When a part of a spindle needs to be replaced, the user needs only to remove the faulty part of the spindle, select a replacement part (male; female; intermediate; or any combination thereof) and connect it to the spindle.

### A method of replacing a part of a spindle according to the invention

The invention also provides a method of replacing a part of a spindle. This part may need to be replaced due to damage, wear, safety requirements or other reasons. The part to be replaced may be at least one male, female or intermediate part wherein said part comprises at least one connection end with at least one opening therein. The method comprises the following steps:
a) extracting at least one male part or female part of the spindle;
b) providing at least one replacement male part or female part;
c) replacing the at least one extracted male part or female part with at least one replacement male part or female part;
d) centering co-axially the male connection end and the female connection end, preferably with a pin, to form a spindle with a continuous thread.

This is advantageous because if a part of a spindle is damaged, only the damaged part is replaced, thus removing the need to replace the whole spindle. This enhances performance and lifespan, as well as, saving both time and money.

The preferred embodiments of the invention are described, with the help of figures, in more detail below. These embodiments can be taken alone or in any combination without departing from the scope of the invention. It should be noted that all figures are only a schematic representation and not to scale. The figures show:
Fig. 1 shows a schematic cross-sectional view of an embodiment of a spindle according to the invention.
Fig. 2a shows a schematic cross-sectional view in the plane of the opening of a male part.
Fig. 2b shows a schematic cross-sectional view in the plane perpendicular to the opening of a male part.
Fig. 3a shows a schematic cross-sectional view in the plane of the opening of a female part.
Fig.3b shows a schematic cross-sectional view in the plane perpendicular to the opening of a female part.
Fig.4a shows a schematic cross-sectional view in the plane of the opening of an intermediate part.
Fig.4b shows a schematic cross-sectional view in the plane perpendicular to the opening of an intermediate part.
Fig. 5 shows a schematic view of a pin of the angular positioning means.
Fig. 6a shows a schematic cross-sectional view of a spindle according to the invention comprising one intermediate part.
Fig. 6b shows a schematic cross-sectional view of a spindle according to the invention comprising one intermediate part.
Fig. 7a is a schematic representation of a single-piece spindle.
Figs. 7b-7d are a schematic representation of the types of parts into which spindle 7 can be cut
Fig. 8 is a schematic representation of a top view of the apparatus set-up, including the template spindle and mechanical stop, which is used in a method to prepare a spindle according to the invention.

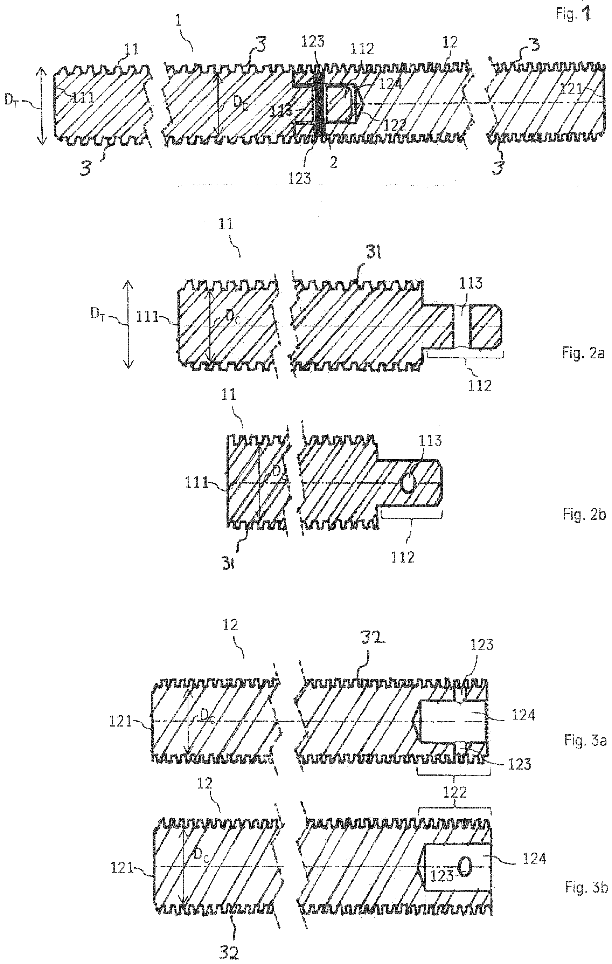

An advantageous embodiment of a spindle 1 according to the invention is shown schematically in figure 1. Spindle 1 has a thread 3 with a thread diameter D_{T} and a core diameter D_{C}, wherein the core diameter D_{C} is smaller than the thread diameter D_{T}. Spindle 1 comprises a male part 11 and a female part 12. The male and female parts, 11, 12 comprise a terminal end 111, 121 and a connection end 112, 122 respectively. The connection end 112 of the male part 11 comprises an opening 113 and the connection end 122 of the female part 12 comprises two openings 123, 123. The male part 11 further comprises a first thread section 31 on its outer surface. The male part connection end, however, comprises no threads on its outermost surface. The female part 12 further comprises a second thread section 32 on its outer surface such that, the thread section along the outer surface of the whole female part is continuous.

The opening 113 of the male part extends into a channel which travels from one outermost surface of connection end 112 to the opposite outermost surface of the connection end 112. The opening 123 of the female part extends into a channel and travels from one outermost surface of the connection end 122 until it reaches cavity 124. At the opposite outermost surface of the connection end 122, opening 123 extends into a channel and travels until it reaches cavity 124, so that the two opposite openings 123, 123 comprised within the female connection part 122 face each other on the same plane. The cavity 124 connects the two openings 123, 123. The interior of the cavity preferably comprises no threads so that it easily accommodates the male connection end. The cavity starts at the surface opposite the female terminal end and extends in the direction towards the terminal end.

The connection end 112 is inserted into the connection end 122 and the openings comprised therein, 113 and 123, are aligned so that a channel from one outermost surface of the spindle 1 to the opposite outermost surface of the spindle 1 is created. A pin 2 is inserted into opening 123 and is pushed into the opening 113 and the extended channel until it reaches at least a part of the opposite opening 123, thus aligning the first thread section 31 with the second thread section 32 to give a continuous thread 3 on spindle 1. This represents the angular positioning means of the spindle according to the invention. Preferably, pin 2 lies within the core diameter (D_{C}) of spindle 1 so that the thread 3 spindle 1 is not interrupted.

Figures 2a and 2b show a male part 11 of a spindle 1 according to the invention taken from different perspectives. The male part 11 comprises a terminal end 111 and a connection end 112 and a first thread section 31, wherein the connection end 112 comprises an opening 113. The terminal end 111 of the male part represents a terminal end of the spindle 1. The opening 113 is on the outermost surface of the connection end 112 and extends into a channel that travels to the opposite side of the outermost surface of the connection end 112. The opening 113 is adapted to host a pin 2 and forms part of the angular positioning means.

Figures 3a and 3b show a female part 12 of a spindle 1 according to the invention taken from different perspectives. The female part 12 comprises a terminal end 121 and a connection end 122 and a second thread section 32. The terminal end 121 of the female part represents a terminal end of the spindle 1. The connection end 122 comprises cavity 124 and two openings 123, 123. Said openings 123, 123 are situated on the outermost surface of the connection end and are connected to the cavity 124 so that a channel is formed from one outermost surface of the connection end 122 to the opposite outermost surface of the connection end 122. The openings 123, 123 are adapted to host a pin 2 and form part of the angular positioning means.

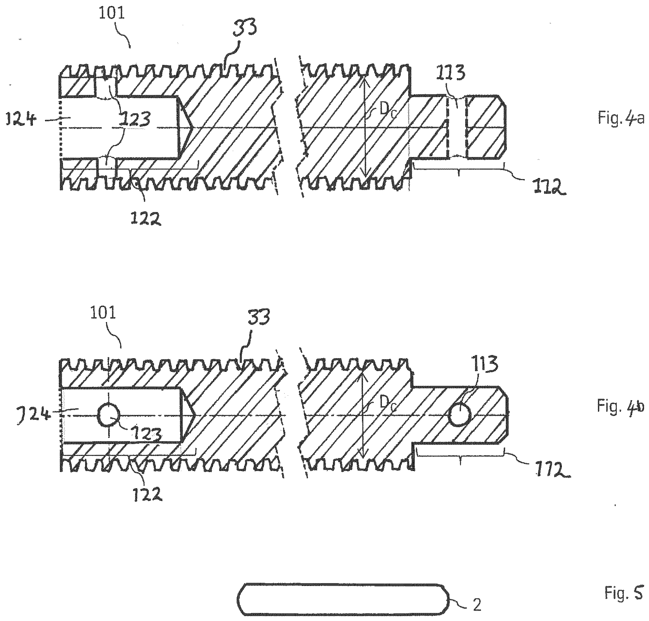

Figures 4a and 4b show an intermediate part 101 of spindle 1. The intermediate part 101 is constituted by a male and/or female part and comprises both the male connection end 112 and the female connection end 122 and a further thread section 33. The male connection end 112 comprises the male part opening 113. The female connection end 122 comprises cavity 124 and two openings 123, 123. The cavity 124 comprises the male connection end 112 of a male part 11, or a male connection end 112 of a further intermediate part 101. The male connection end 112 is comprised within the connection end 122 of a female part 12, or the female connection part 122 of a further intermediate part 101.

Figure 5 shows a pin of the angular positioning means, which can be used to secure a male connection end with a female connection end. The pin lies within the core diameter of the spindle (Dc).

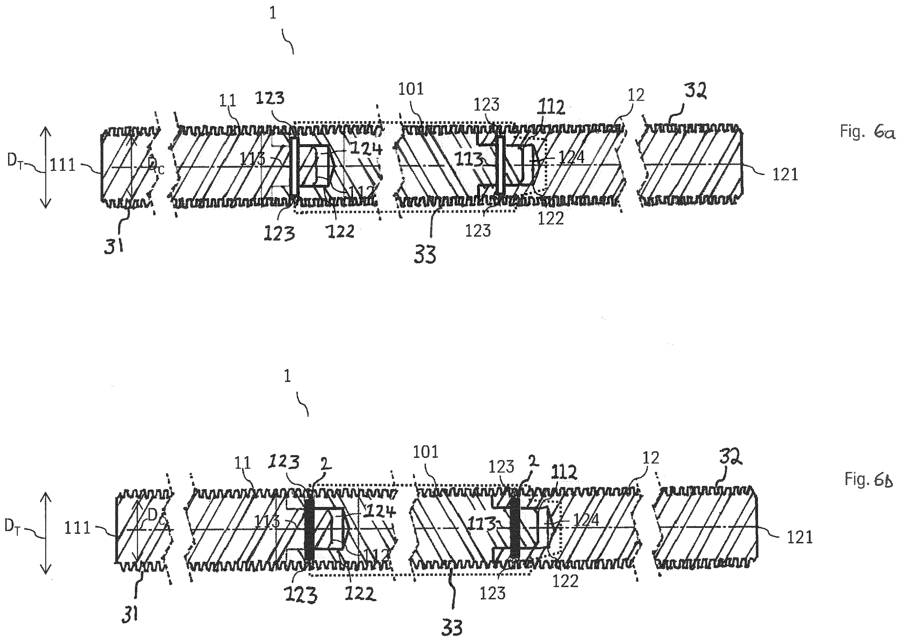

In another advantageous embodiment of the invention, the spindle 1 further comprises an intermediate part 101, as shown in figures 6a and 6b. The intermediate part 101 is positioned between the male part 11 and the female part 12, as highlighted in the figures with a dotted line. The intermediate part comprises both male and female connection ends, 121, 122 and a further thread section 33. The intermediate male connection end 121 is inserted into the connection end 122 of the female part 12.The male connection end 112 of the male part 11 is inserted into the intermediate female connection end 122 (figure 1a). The parts are secured in place and the continuity of the thread on the spindle are ensured via the angular positioning means. The openings 113, 123 are aligned and a pin 2 is inserted so that it protrudes from the first female opening, into the male opening and further into the second female opening. Preferably, the pin lies within the core D_{C} of the spindle. This ensures that threads 31, 32, and 33 are continuous over the connection of all parts, i.e., male 11, intermediate 101 and female 12 parts, and thus the thread 3 of spindle 1 is continuous.

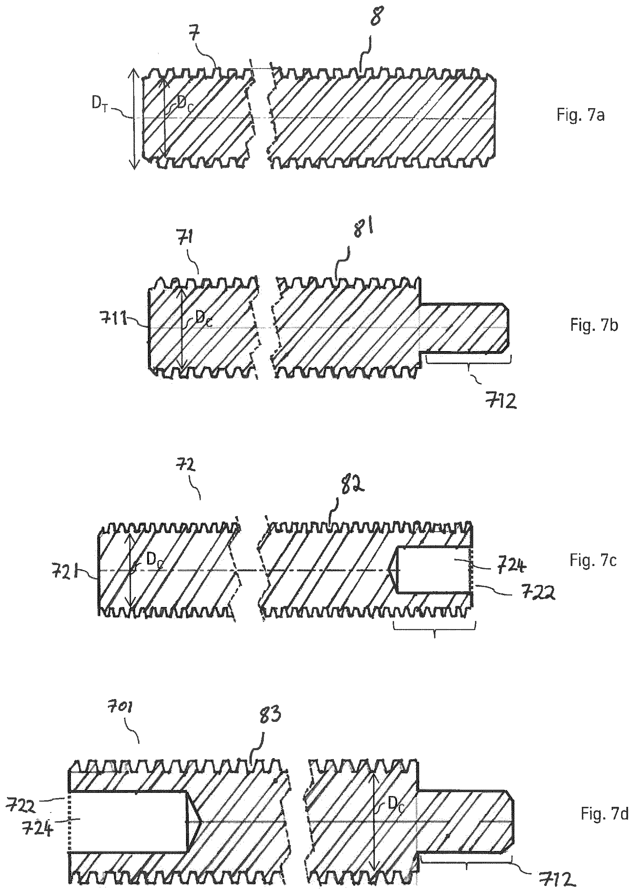

Figures 7a to 7d show a single-piece spindle 7 and the parts into which spindle 7 can be cut. Figure 7a shows a single-piece spindle 7 having a thread 8, wherein no angular positioning means is present, i.e., no openings in the male 71 or female 72 parts and no pin. This is shown more clearly in figures 7b to 7dFigure 7b shows part 71 comprising a male connection end 712, a terminal end 711 and first thread section 81.
Figure 7c shows part 72 comprising a female connection end 722, a female cavity 724, a terminal end 721and a second thread section 82.
Figure 7d shows part 701 comprising a male connection end 712, a female connection end 722, a female cavity 724 and a further thread section 83.

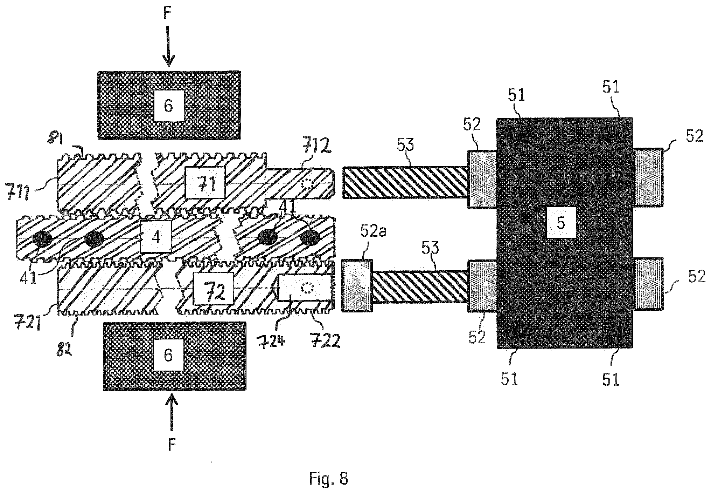

Figure 8 is a schematic representation of the apparatus set-up when parts 71, 72, 701 obtained from a single-piece spindle 7 are prepared into male 11, female 12 and/or intermediate (101) parts, which can then be assembled to produce a spindle according to the invention. The apparatus comprises a template spindle 4 and at least one mechanical stop 5. In the figure, part 71 comprising male connection end 712 and terminal end 711 and part 72 comprising female connection end 722, female cavity 724 and terminal end 721 are shown at either side of template spindle 4.The template spindle 4 is secured in place with screws 41. These two parts could also each comprise a male 712 and a female 722 connection end; or one part could comprise a male connection end 712 and the second part could comprise both male and female connection ends 712, 722; or one part could comprise a female connection end 722 and the second part could comprise both male 712 and female 722 connection ends.

The male connection end 712 is positioned so that it is contactable by the rod 53 of the mechanical stop 5. The female connection end 722 is positioned so that it is contactable by the movable nut 52a on the rod 53 of the mechanical stop 5. This serves to hold the respective spindle parts 71, 72 in place at either side of the template spindle 4. It also ensures that the angle at which the opening is introduced in one connection end, is the same as the angle introduced in the other connection end, thereby ensuring tolerances of the spindle comprising said parts. Once both parts 71 and 72 are in place, blocks 6, positioned on the side of parts 71, 72 opposite to the side facing the template spindle 4 are moved to contact the surface of the parts 71, 72. Force F is applied to each block 6 in order to further secure the spindle parts 71, 72 and ensure tolerances. An opening (shown as dotted line areas in the figure) is then introduced in at least one connection end 712, 722, or both connection ends via a device (not shown). Said device can be a drill or any other device capable of penetrating the spindle material.

### Reference signs list

- 1: spindle
- 2: pin

- 3: thread
- 31: first thread section
- 32: second thread section
- 33: further thread section

- 4: template spindle
- 41: screw

- 5: mechanical stop
- 51: bolt within mechanical stop
- 52: nut
- 52a: movable nut
- 53: threaded rod

- 6: block

- 7: single-piece spindle
- 71: part with male connection end
- 72: part with female connection end
- 701: part with both male and female connection ends
- 711: terminal end
- 712: male connection end
- 721: terminal end
- 722: female connection end
- 724: female cavity

- 8: thread
- 81: first thread section
- 81: second thread section
- 83: further thread section
- 11: male part
- 12: female part
- 101: intermediate part
- 111: male terminal end
- 112: male connection end
- 113: male part opening
- 121: female terminal end
- 122: female connection end
- 123: female part opening
- 124: female cavity

## Claims

1. A spindle (1) for driving an elevator,
the spindle (1) having a thread (3) on a peripheral surface,
**characterized in,**
**that** the spindle (1) comprises at least two parts:
- a male part (11) having a male connection end (112), and a first thread section (31) on its outer surface; and
- a female part (12) having a female connection end (122), and a second thread section (32) on its outer surface;
wherein the male connection end (112) and the female connection end (122) contact each other;
wherein the spindle (1) further comprises an angular positioning means (2, 113, 123) which is adapted to position both parts (11, 12) in a relative position to each other so that the first and second thread sections (31, 32) forms the thread (3), wherein the thread (3) is continuous.

2. The spindle according to claim 1, **characterized in that** the angular positioning means (2, 113, 123) comprises
- a male part opening (113), in particular located at the male connection end (112), and
- a female part opening (123), in particular located at the female connection end (122)
- a pin (2) protruding through the male part opening (113) and through the female part opening (123).

3. The spindle (1) according to any of the preceding claims, **characterized in that** the male connection end (112) and the female connection end (122) are centered co-axially to each other.

4. The spindle (1) according to any of the preceding claims, **characterized in that** the female part comprises two female part openings (123).

5. The spindle (1) according to any of the preceding claims,
**characterized in,**
**that** the male part (11) and/or the female part (12) constitute an intermediate part (101), wherein said intermediate part (101) comprises a male connection end (112) and a female connecting end (122).

6. The spindle (1) according to the previous claim, comprising
- a male part (11),
- a female part (12) and
- an intermediate part (101),
the intermediate part (101) located between the male part (11) and the female part (12).

7. Elevator installation, comprising a spindle according to any of the preceding claims.

8. A method for replacing a part of a spindle according to any of claims 1 to 6 or a spindle of the elevator installation of claim 7,
**characterized in,**
**that** the method comprises the following steps:
a) extracting at least one male part (11) or female part (12) of the spindle (1) ;
b) providing at least one replacement male part (11) or female part (12);
c) replacing the at least one extracted male part (11) or female part (12) with at least one replacement male part (11) or female part (12);
d) centering co-axially the connection ends of the replacement male (11) or female (12) part to the connection end of the male (11) or female (12) part of the spindle (1) to form a spindle (1) with a continuous thread (3).
